# EUROPÄISCHE PATENTSCHRIFT

(11) **EP 2 820 247 B1**
(45) Veröffentlichungstag und Bekanntmachung des Hinweises auf die Patenterteilung: **17.02.2021**
(21) Anmeldenummer: 12708116.4
(22) Anmeldetag: 02.03.2012
(51) Int. Cl.: F01C 19/00, F04C 2/08, F04C 15/00

(54) **DICHTUNGSANORDNUNG, EINE FÖRDEREINRICHTUNG MIT EINER DICHTUNGSANORDNUNG SOWIE EIN VERFAHREN ZUM BETRIEB DER DICHTUNGSANORDNUNG**
SEALING ARRANGEMENT, A CONVEYING DEVICE HAVING A SEALING ARRANGEMENT AND A METHOD FOR OPERATING THE SEALING ARRANGEMENT
SYSTÈME D'ÉTANCHÉITÉ, DISPOSITIF DE TRANSPORT POURVU D'UN SYSTÈME D'ÉTANCHÉITÉ AINSI QUE PROCÉDÉ PERMETTANT DE FAIRE FONCTIONNER LEDIT SYSTÈME D'ÉTANCHÉITÉ

(43) Veröffentlichungstag der Anmeldung: 07.01.2015
(73) Patentinhaber: Maag Pump Systems AG, 8154 Oberglatt (CH)
(72) Erfinder: TRIEBE, René, 8603 Schwerzenbach (CH)
(74) Vertreter: Troesch Scheidegger Werner AG
(86) Internationale Anmeldenummer: PCT/EP2012/053590
(87) Internationale Veröffentlichungsnummer: WO 2013/127464

(56) Entgegenhaltungen:
- CN-Y- 2 219 989
- DE-U1-202004 018 733
- JP-A- H08 219 029

## Beschreibung

Die vorliegende Erfindung betrifft eine Dichtungsanordnung, eine Fördereinrichtung, insbesondere eine Zahnradpumpe, mit einer Dichtungsanordnung sowie ein Verfahren zum Betrieb der Dichtungsanordnung.

Viele Polymere sind als Schmelze sehr reaktionsfreudig bei einem Kontakt mit Sauerstoff. Bereits geringste Mengen an Sauerstoff können Reaktionen verursachen, welche unerwünschte Wirkungen auf die Polymereigenschaften haben. Zudem kann es passieren, dass sich nicht nur die Qualität des hergestellten Polymers signifikant verschlechtert, sondern eindringender Sauerstoff kann dazu führen, dass die gesamte Reaktionschemie im Reaktorbehälter kippt. Als Folge davon muss der Polymerisationsprozess unterbunden werden, bis der Behälter und allfällige Zuführleitungen sowie Fördereinrichtungen komplett gereinigt sind.

Gerade während der Herstellung von Polymeren in Polymerisationsreaktoren ist daher Ausschluss von Sauerstoff aus dem Polymerisationsprozess und den dazu notwendigen Anlagenkomponenten von höchster Wichtigkeit.

Oft werden Zahnradpumpen als Fördereinrichtungen unterhalb von Polymerisationsreaktoren eingesetzt. Diesen Zahnradpumpen fällt die Aufgabe zu, das fertige Reaktionsprodukt aus dem Reaktor auszutragen und in weiterführende Anlagenkomponenten zu fördern.

Zur Vermeidung von Sauerstoffkontakt mit dem Fördermedium wurde bereits vorgeschlagen, eine Ummantelung bzw. Umhausung der kritischen (allenfalls undichten) ProzessKomponenten (z.B. der Zahnradpumpe) mit einem zusätzlichen Schutzgehäuse vorzusehen. Hierzu werden die relevanten Anlagekomponenten beispielsweise mit einem Blechmantel umfasst, wobei der Zwischenraum zwischen den Anlagenkomponenten und dem Schutzgehäuse mit Reinststickstoff geflutet wird.

Bei richtiger Implementierung dieser Methode wird zwar ein Eintritt von Sauerstoff an möglichen Leckagestellen der Prozesskomponenten (z.B. Zahnradpumpe) vermieden, allerdings hat die bekannte Methode wesentliche Nachteile:
- Die Ummantelung von Anlagenkomponenten ist sehr teuer in der Herstellung.
- Die ummantelte Anlagekomponente ist nicht mehr einfach zugänglich, kann daher nur noch schlecht beobachtet und erst nach einer Demontage oder einem Öffnen der Ummantelung gewartet werden.
- Bei der Ummantelung einer kompletten Fördereinrichtung muss auch der Antrieb ummantelt werden, ansonsten ein signifikantes Stickstoffleck im Bereich der rotierenden Welle entsteht, da sich diese schlecht abdichten lässt.
- Ein Abdichten von Durchführungen für Sensoren und Aktuatoren (z.B. von aussen betätigbare Handräder und Verstellmechanismen) sind nur sehr schlecht zu realisieren.
- Die bekannten Ummantelungen dichten nicht optimal, so dass oft grosse Mengen an Reinststickstoff nutzlos entweichen.
- Zudem besteht im Umfeld einer undichten Ummantelung, die mit Reinstickstoff befüllt wird, eine Erstickungsgefahr für Bedienpersonal, weil die sauerstoffhaltige Umgebungsluft durch Stickstoff verdrängt wird.

Um benötigte Trennstellen innerhalb von Anlagekomponenten abzudichten (zum einen gegen Polymeraustritt aus der unter hohem Innendruck stehenden Fördereinrichtung oder auch gegen allfälligen Sauerstoffeintritt), werden die unterschiedlichsten Dichtungsvarianten eingesetzt.

Beispielsweise wird zur Abdichtung von Dichtstellen zwischen Zahnradpumpengehäuse und Zahnradpumpendeckel gasgefüllte Metall-O-Ringe in den Deckel oder das Gehäuse eingebaut.

Unter normalen Bedingungen dichten diese recht zuverlässig gegen Austritt von Polymer aus der unter hohem Innendruck stehenden Pumpe ab. Allerdings ist die Dichtwirkung für Gase nicht unter allen Betriebszuständen optimal.

Ein weiterer Stand der Technik ist, dass einzelne Dichtungen von aussen mit Stickstoff überlagert werden und dieser dann über Spalte nach aussen in die Umgebung fliesst. Auch bei dieser Lösung werden grosse Mengen an Stickstoff verbraucht. Zudem ist das gesamte System nicht kontrollierbar.

Dokument JP H08 219029 A zeigt eine Dichtungsanordnung für eine Zahnradpumpe. Der vorliegenden Erfindung liegt daher die Aufgabe zugrunde, eine verbesserte Dichtungsanordnung anzugeben, die zumindest einen der angegebenen Nachteile der bekannten Anordnungen nicht aufweist.

Diese Aufgabe wird durch die Merkmale des Anspruchs 1 gelöst. Vorteilhafte weitere Ausgestaltungen der vorliegenden Erfindung, eine Fördereinrichtung, insbesondere eine Zahnradpumpe, sowie ein Verfahren zum Betrieb der Dichtungsanordnung sind in weiteren Ansprüchen angegeben.

Die vorliegende Erfindung betrifft zunächst eine Dichtungsanordnung einer Polymer-fördende Zahnradpumpe, bei denen ein Innenraum gegenüber einem Aussenraum abdichtbar ist. Die Dichtungsanordnung umfasst mindestens zwei Teile mit mindestens je einer Dichtfläche, wobei die Dichtflächen umfassen:
- eine erste Dichtung entlang eines ersten, medialen Perimeters der Dichtfläche,
- eine zweite Dichtung entlang eines zweiten, lateralen Perimeters der Dichtfläche,
- eine Ausnehmung zwischen der ersten Dichtung und der zweiten Dichtung,
wobei die Ausnehmung mit einer Quelle mit einem Spülmedium derart verbindbar ist, dass die Ausnehmung mit dem Spülmedium aktiv durchspülbar ist.

Dabei kann das Spülmedium beispielsweise gasförmig oder flüssig sein. Bei einem gasförmigen Spülmedium ist zum Beispiel Stickstoff oft geeignet. Bei einem flüssigen Spülmedium ist zum Beispiel ein Silikon-Öl geeignet. Ferner wird insbesondere ein Spülmedium gewählt, das in Bezug auf das Fördermedium inert ist. Somit können keine ungewollten Fördermediumsveränderungen auftreten.

Eine Ausführungsvariant der erfindungsgemässen Dichtungsanordnung besteht darin, dass die erste Dichtung und/oder die zweite Dichtung einen O-Ring oder eine Spiraldichtung umfassen.

Weitere Ausführungsvarianten der erfindungsgemässen Dichtungsanordnung bestehen darin, dass die Quelle so ausgestaltet ist, dass ein konstanter Fluss des Spülmediums durch die Ausnehmung oder ein konstanter Druck des Spülmediums in der Ausnehmung aufrecht haltbar ist.

Weitere Ausführungsvarianten der erfindungsgemässen Dichtungsanordnung bestehen darin, dass die Ausnehmung und die Quelle so ausgestaltet sind, dass ein geschlossener Gaskreislauf aufrecht haltbar ist.

Weitere Ausführungsvarianten der erfindungsgemässen Dichtungsanordnung bestehen darin, dass die Ausnehmung zumindest abschnittsweise parallel zur ersten Dichtung und/oder zur zweiten Dichtung verläuft.

Weitere Ausführungsvarianten der erfindungsgemässen Dichtungsanordnung bestehen darin, dass eine Eintrittsstelle für Spülmedium und eine Austrittsstelle für Spülmedium vorgesehen sind, die mit der Ausnehmung wirkverbunden sind.

Weitere Ausführungsvarianten der erfindungsgemässen Dichtungsanordnung bestehen darin, dass das eine Teil ein Gehäuse der Fördereinrichtung und das zweite Teil ein Deckel auf dem Gehäuse der Fördereinrichtung ist.

Weitere Ausführungsvarianten der erfindungsgemässen Dichtungsanordnung bestehen darin, dass ein Durchflussensor zur Messung eines Spülmediumflusses durch die Ausnehmung vorgesehen ist.

Weitere Ausführungsvarianten der erfindungsgemässen Dichtungsanordnung bestehen darin, dass das Spülmedium ein inertes Gas, insbesondere Stickstoff, oder eine inerte Flüssigkeit, insbesondere ein Silikon-Öl, ist.

Weitere Ausführungsvarianten der erfindungsgemässen Dichtungsanordnung bestehen darin, die Ausnehmung eine Nut ist.

Ferner ist eine erfindungsgemässe Fördereinrichtung, insbesondere eine Zahnradpumpe, zur Förderung eines Fördermediums in einem Innenraum, der von einem Aussenraum im Wesentlichen hermetisch abgedichtet ist, wobei die Fördereinrichtung mindestens eine erfindungsgemässe Dichtungsanordnung gemäss den vorstehenden Ausführungen aufweist.

Schliesslich ist ein Verfahren zum Betreiben einer erfindungsgemässen Dichtungsanordnung angegeben, wobei die Dichtungsanordnung eine zwischen einer ersten und einer zweiten Dichtung liegende Ausnehmung umfasst, die mit einem Spülmedium gespült wird.

Eine Ausführungsform des Verfahrens besteht darin, dass ein Durchfluss des Spülmediums durch die Ausnehmung oder ein Druck des Spülmediums in der Ausnehmung konstant gehalten wird.

Weitere Ausführungsformen des Verfahrens bestehen darin, dass ein Durchfluss des Spülmediums in die Ausnehmung gemessen wird.

Weitere Ausführungsformen des Verfahrens bestehen darin, dass aus Messungen des Durchflusses ein möglicher Mediumverlust an Spülmedium bestimmt wird und dass bei Überschreiten eines vorgegebenen Grenzwertes für den Mediumverlust eine akustische und/oder visuelle Warnanzeige aktiviert wird.

Es wird ausdrücklich darauf hingewiesen, dass die vorstehend erwähnten Ausführungsvarianten, seien es diejenigen für die Dichtungsanordnung, für die Fördereinrichtung oder für das Verfahren, in beliebiger Weise kombinierbar sind. Lediglich diejenigen Kombinationen bzw. Kombinationen von Kombinationen sind ausgeschlossen, die ansonsten zu Widersprüchen führen würden.

Die vorliegende Erfindung wird nachfolgend anhand von Zeichnungen, die mögliche Ausführungsvarianten darstellen, weiter erläutert. Dabei zeigen:
- Fig. 1: eine erste Ausführungsvariante einer erfindungsgemässen Dichtungsanordnung in schematischer Darstellung,
- Fig. 2: eine zweite Ausführungsvariante einer erfindungsgemässen Dichtungsanordnung, wiederum in schematischer Darstellung,
- Fig. 3: eine Zahnradpumpe, die mit der erfindungsgemässen Dichtungsanordnung gegen aussen abgedichtet ist,
- Fig. 4: die erfindungsgemässe Dichtungsanordnung in einer Draufsicht,
- Fig. 5: ein Blockdiagramm für eine Überwachung des Durchflusses für ein Spülmedium durch eine Ausnehmung und
- Fig. 6: eine weitere Ausführungsvariante für eine erfindungsgemässe Dichtungsanordnung.

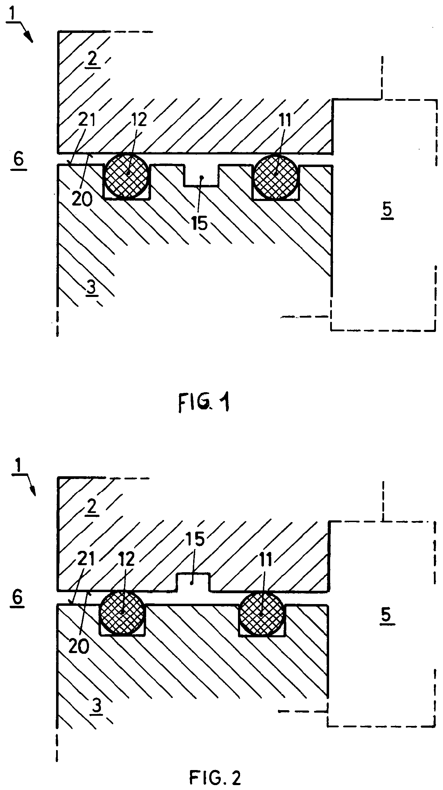

Fig. 1 zeigt schematisch eine erste Ausführungsvariante für eine erfindungsgemässe Dichtungsanordnung 1 in einem Schnitt quer zum Dichtungsverlauf. Die Dichtungsanordnung 1 ist zum hermetischen Abdichten von zwei lösbar miteinander verbindbaren Teilen 2 und 3 geeignet. Dabei soll verhindert werden, das insbesondere Gase von einem Aussenraum 6 in einen Innenraum 5 und umgekehrt gelangen können. Ausgehend vom Innenraum 5, der bei einer Zahnradpumpe beispielsweise der Pumpeninnenraum ist, besteht die Dichtungsanordnung 1 zunächst aus einer ersten Dichtung 11. Ausgehend vom Aussenraum 6, der beispielsweise die Umgebung ist, besteht die Dichtungsanordnung 1 zunächst aus einer zweiten Dichtung 12. Zwischen der ersten Dichtung 11 und der zweiten Dichtung 12 ist eine Ausnehmung 15, beispielsweise in der Form einer Nut, vorgesehen, durch die ein Spülmedium, beispielsweise Stickstoff, strömt. Die Ausnehmung 15 kann entweder im Teil 3 (Fig. 1) oder im Teil 2 (Fig. 2) angeordnet sein. Denkbar ist auch eine Ausführungsvariante, bei der sowohl im ersten als auch im zweiten Teil eine Ausnehmung 15 vorgesehen ist (in den Figuren nicht dargestellt).

Die Dichtungsanordnung 1 ist somit zweistufig ausgeführt, nämlich indem die erste Dichtung 11 und die zweite Dichtung 12 vorgesehen sind. In der Mitte zwischen den zwei Dichtungen 11 und 22 ist eine Spülzone vorgesehen, in der über eine explizit vorgesehene Ausnehmung 15 das Spülmedium hinzugegeben wird, das aktiv durch die Ausnehmung 15 strömt und allfällig eintretenden Sauerstoff mit sich reisst und ihn gezielt wegführt, so dass keine Möglichkeit besteht, dass das Fördermedium im Innenraum 5 mit dem Sauerstoff in Kontakt kommt. Erfindungsgemäss wird also das Spülmedium aktiv in eine Spülzone, bestehend aus dem Zwischenraum zwischen den beiden Dichtungen 11 und 12, besonders jedoch aus der Ausnehmung 15, da diese die grösste Querschnittfläche ausmacht, einströmen und aktiv abgeführt.

Bei den Dichtungen 11 und 12 kann es sich beispielsweise um O-Ringe handeln. Es wird aber ausdrücklich darauf hingewiesen, dass die Erfindung prinzipiell bei jedem bewährten Dichtungstyp einwandfrei funktioniert. In einer weiteren Ausführungsvariante ist denkbar, dass zwei verschiedenen Dichtungstypen eingesetzt werden, d.h. die erste Dichtung 11 und die zweite Dichtung 12 müssen nicht nach dem gleichen Prinzip arbeiten.

Als Dichtung eignet sich insbesondere auch eine Spiraldichtung (beispielsweise unter dem Handelsnamen Spiroflex erhältlich). Die Spiraldichtung besteht aus einem spiralförmig gewickelten Dichtmaterial, das unter einer Vorspannung verpresst wird. Theoretisch weist daher eine Spiraldichtung ein minimaler Leckage-Kanal entlang der gewickelten spiralförmigen Rillen auf. Aus diesem Grund gilt die Spiraldichtung auch als nicht perfekte Dichtung. Gerade auch bei solchen nicht perfekten Dichtungen ermöglicht die erfindungsgemässe Dichtungsanordnung trotzdem eine gute Abdichtung, dies insbesondere bei gasförmigen Spülmedien.

Die vorliegende Erfindung hat insbesondere auch bei einem Versagen einzelner Komponenten der Dichtungsanordnung 1 wesentliche Vorteile gegenüber bekannten Dichtungsanordnungen.

Im Falle eines Versagens der ersten Dichtung 11 gelangt heisses Polymer bis zur zweiten Dichtung 12 und verstopft im schlimmsten Fall höchstens den Spülkanal, d.h. die Ausnehmung 15. Ferner besteht weiter die Möglichkeit, dass Spülmedium in den Innenraum 5 gelangt und so mit dem Fördermedium in Kontakt kommt. Dies birgt bekanntlich keine Gefahr, da das Spülmedium so gewählt wird, dass sich das Fördermedium durch einen Kontakt mit dem Spülmedium nicht verändern wird.

Im Falle des Versagens der zweiten Dichtung 12 gelangt im schlimmsten Fall Spülmedium in die Umgebung. Diese Situation kann mit einem noch zu beschreibenden Verfahren detektiert und nach Bedarf angezeigt werden.

Sogar die Möglichkeit einer Diffusion von Sauerstoff durch die zweite Dichtung 12 in den Spülraum, wo es sich - falls nicht aktiv wegtransportiert wird - im Spülmedium, hier beispielsweise Stickstoff, anreichern kann und dann in den Prozess gelangen kann, wird durch das aktive Wegspülen gebannt.

Die erfindungsgemässe Dichtungsanordnung 1 hat mindestens einen der folgenden Vorteile:
- Mehrfachdichtungen, wie es gemäss der erfindungsgemässen Dichtungsanordnung mit der ersten Dichtung 11 und der zweiten Dichtung 12 vorgeschlagen wird, vertragen das Versagen einer Dichtung besser, und zwar unabhängig davon, ob gleiche oder unterschiedliche Dichtungstypen eingesetzt werden. Fällt beispielsweise die erste (d.h. innere) Dichtung 11 aus - zum Beispiel wegen einem Durchbiegen eines bei einer Zahnradpumpe verwendeten Deckels, wegen Verbrennen des Dichtungsmaterials, Versprödung, Langzeiteinflüssen (insbesondere auf das Fördermedium) -, dichtet die äussere Dichtung 12 noch ab.
- Das Volumen für Spülmedium ist relativ klein und lokal in der Dichtzone klar begrenzt; grosse Leckagen von Spülmedium lassen sich damit vermeiden.
- Ein Spülmediumdurchfluss kann gezielt eingestellt und an einem Ort abgelassen werden, an welchem keine Gefährdung von Personen besteht.
- Die Dichtungsanordnung 1 lässt sich in zweifacher Hinsicht kontrollieren: Erstens kann eine Veränderung, insbesondere ein Rückgang der Spülmediumsströmung oder ein Druckabfall bei geschlossenen Leitungen für das Spülmedium detektiert werden. Zweitens kann jede einzelne Dichtzone (d.h. innerhalb der ersten Dichtung 11 - d.h. im Innenraum 5), zwischen der ersten Dichtung 11 und der zweiten Dichtung 12, und ausserhalb der zweiten Dichtung 12 (d.h. im Aussenraum 6) einzeln mit Helium gefüllt werden, um so eine leckende Dichtungsanordnung identifizieren zu können.
- Eine Ummantelung einer Anlagekomponente entfällt, womit die Anlagekomponenten für Wartungsarbeiten besser zugänglich sind.

Auch bei einem temporären Abheben der Dichtflächen 20 und 21 (z.B. wegen grosser mechanischer Belastung) verhindert das Spülmedium ein Eindringen von Sauerstoff zuverlässig.

Die erfindungsgemässe Dichtungsanordnung 1 eignet sich insbesondere zur Verwendung bei Zahnradpumpen, wobei die Dichtungsanordnung 1 an jedem der beiden Pumpendeckel verwendbar ist. Darüber eignet sich die erfindungsgemässe Dichtungsanordnung hervorragend bei allen Dichtungsdeckeln und bei allen Dichtungsstellen von in die Zahnradpumpe hineinragenden Sensoren oder Aktuatoren. Im Allgemeinen eignet sich die erfindungsgemässe Dichtungsanordnung insbesondere bei allen statischen Dichtstellen.

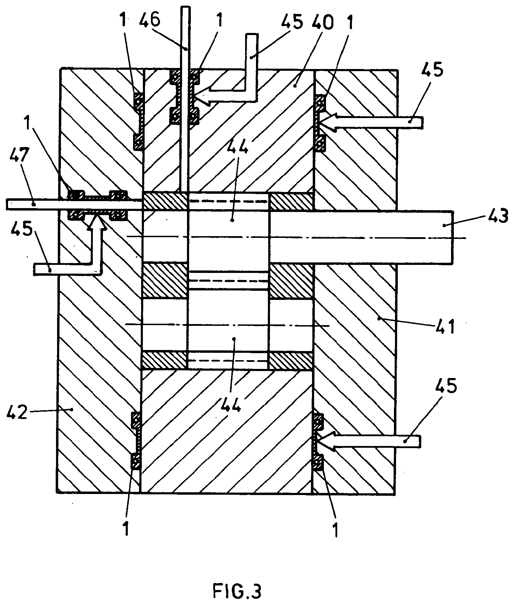

In Fig. 3 ist ein Schnitt durch eine Zahnradpumpe dargestellt, die aus einem Pumpengehäuse 40, aus einem ersten Deckel 41, durch den eine Antriebswelle 43 nach aussen geführt ist, und aus einem zweiten Deckel 42 auf der in Bezug auf den ersten Deckel 41 gegenüberliegenden Seite des Pumpengehäuses 40 besteht. Mit 1 sind wiederum die Dichtungsanordnungen bezeichnet, wie sie anhand der Fig. 1 und 2 beispielsweise erläutert worden sind, wobei über Zu- bzw. Abführleitungen 45 das Spülmedium zu- bzw. abgeführt wird. Die erfindungsgemässen Dichtungsanordnungen 1 werden zur statischen Abdichtung von einer Sensoreinheit 46, zum Beispiel eines Drucksensors, oder von einer Aktuatoreinheit 47, zum Beispiel zur Steuerung eines Durchflussventils, wie sie häufig bei Zahnradpumpen im Rückflusskanal benötigt werden, verwendet.

Für die Abdichtung der aus dem Pumpengehäuse 40 und dem ersten Deckel 41 herausgeführten Antriebswelle 43 ist eine dynamische Dichtung von Vorteil, wie sie beispielsweise in der EP-0 881 392 B1 der gleichen Anmelderin beschrieben worden ist.

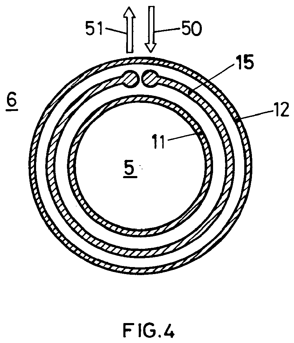

Fig. 4 zeigt die Dichtungsanordnung der Fig. 1 und 2 in einer Draufsicht, wobei der Innenraum 5 und der Aussenraum 6 ohne weitere Angaben mit den Hinweiszeichen angedeutet sind. In Bezug auf den Innenraum 5 und die weiteren Komponenten der Dichtungsanordnung sind die erste Dichtung 11 auf einem medialen Perimeter und die zweite Dichtung 12 auf einem lateralen Perimeter angeordnet. Zwischen der ersten Dichtung 11 und der zweiten Dichtung 12 ist die Ausnehmung 15 angeordnet, die jedoch im Bereich der Zuführleitung 50 und der Abführleitung 51 unterbrochen ist, damit eine aktive Durchflutung der Ausnehmung 15 mit dem Spülmedium möglich ist.

Die in Fig. 4 dargestellte Dichtungsanordnung wird auch etwa als "Omega"-Anordnung bezeichnet, da das Anströmen und Abströmen von Spülmedium über Ω-förmige Ausnehmungen 15 erfolgt. Dabei liegen die An- und Abströmanschlüsse eng nebeneinander und das Spülmedium muss vom Einlauf her den langen Weg fast um den ganzen Kreis (d.h. mindestens um den Innenraum 5) bis zum Auslass herum fliessen. Dadurch wird sichergestellt, dass der komplette Umfang zwischen den z.B. kreisförmig angeordneten Dichtungen 11 und 12 durchströmt wird.

Aus den soweit erläuterten Dichtungsanordnungen ist ersichtlich, dass die Dichtungen 11 und 12 in einer Ebene angeordnet sind. In einer weiteren Ausführungsvariante der vorliegenden Erfindung ist eine Anordnung der Dichtungen 11 und 12 ausserhalb dieser Ebene (zum Beispiel über ein Eck der abzudichtenden Komponente) vorgesehen.

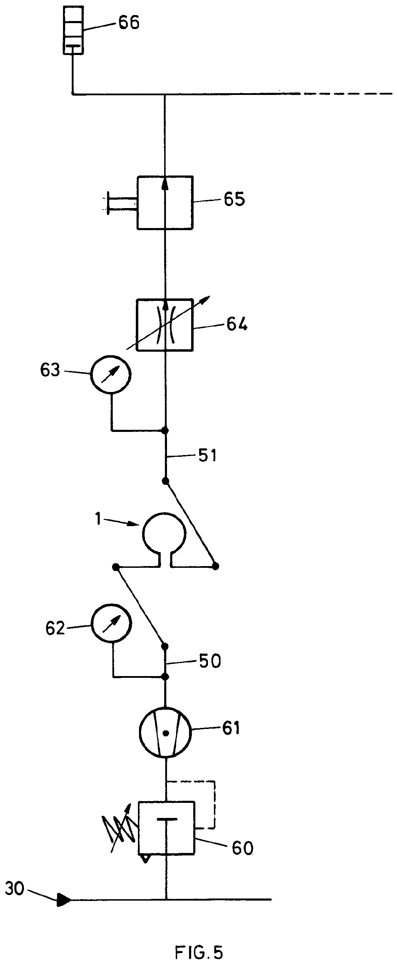

Fig. 5 zeigt in schematischer Darstellung ein Durchflusssystem zur Kontrolle des Durchflusses von Spülmedium durch die Ausnehmung 15 einer Dichtungsanordnung 1. Das Durchflusssystem besteht zunächst aus einer Quelle 30 (beispielsweise ein Druckbehältnis mit ausreichend gespeichertem Spülmedium), die mit dem Zuführleitungssystem über ein Drucksteuerventil 60 und ein Durchflussmeter 61 mit der Zuführleitung 50 einer Dichtungsanordnung 1 verbunden ist. Die Dichtungsanordnung ist in Fig. 5 der Einfachheit halber lediglich mit einem Omega schematisch dargestellt. Die Abführleitung 51 ist wiederum mit einem Leitungssystem verbunden, das über ein Ventil 64 und einen Absperrhahn 65 zu einem Auslass 66 geführt ist, wo beispielsweise eine kontrollierte Abgabe nach aussen erfolgt. Zur Überwachung der Druckverhältnisse in der Dichtungsanordnung ist sowohl eingangsseitig, d.h. bei der Zuführleitung 50, als auch ausgangsseitig, d.h. bei der Abführleitung 51, je ein Drucksensor 62, 63 vorgesehen.

Das erfindungsgemäss vorgeschlagene Durchflusssystem bietet die Möglichkeit einer gezielten Lecksuche. Dazu ist es notwendig, dass sowohl der Volumenstrom und der Druck beim Einströmen in den Spülkanal (Ausnehmung 15) gemessen werden, als auch der Austrittsdruck beim Ausströmen des Spülmediums. Über einen zusätzlichen Ein-/Aus- Schalter kann der Spülmediumsstrom gezielt gestoppt werden. Die Auswertung der Drücke und des Durchflusses gestattet dann eine dezidierte Aussage über die Funktionsweise der Dichtungsanordnung und allfälliger Fehlfunktionen.

In einer weiteren Ausführungsform der vorliegenden Erfindung ist vorgesehen, dass ein solches Durchflusssystem für jede einzelne Dichtungsanordnung an der Zahnradpumpe realisiert wird, so dass separat die Funktion aller einzelnen Dichtungsanordnungen getestet werden kann.

Vorteilhaft ist dabei insbesondere, dass ein Test bei vollem Betrieb der Zahnradpumpe durchgeführt werden kann, ohne dass dies Auswirkungen auf den Polymerisationsprozess hat.

Bei Auftreten von Lecks kann durch Füllen der einzelnen Spülkanäle mit Helium jede Dichtungsanordnung einzeln untersucht werden. Dabei können einerseits Heliumlecks nach innen in den Reaktor detektiert werden. Anderseits können auch Lecks der äusseren Dichtung mit Spürsonden ausserhalb der Zahnradpumpe gezielt gesucht und entdeckt werden. Entsprechende Aufschaltventile und Anschlüsse sind in Fig. 5 nicht mit dargestellt.

Idealerweise ist der Druck des Spülmediums grösser als der atmosphärische Druck, d.h. in der Nut herrscht ein geringer Überdruck.

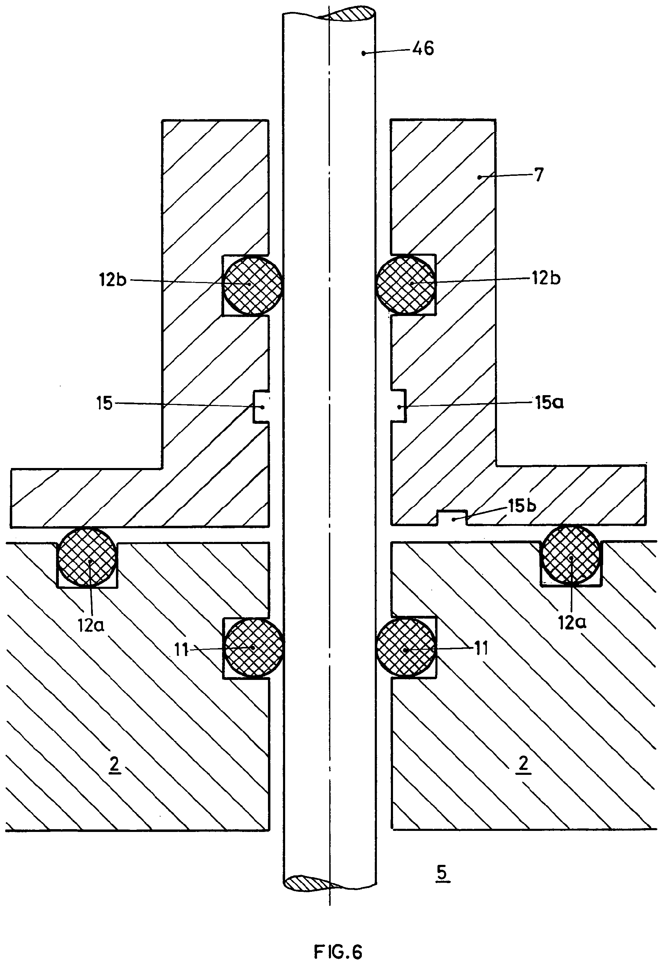

Desweiteren wird ausdrücklich darauf hingewiesen, dass die erfindungsgemässe Dichtungsanordnung - insbesondere zur Abdichtung eines von aussen in den Innenraum 5 der Fördereinrichtung durchgeführten Sensors oder Aktuators - auch über einen Eck angeordnet sein kann, was anhand von Fig. 6 noch weiter erläutert wird. In diesem Fall kann es durchaus eine mediale Dichtung und eine oder mehrere laterale Dichtungen geben.

Fig. 6 zeigt einen Schnitt durch die Fördereinrichtung an der Stelle einer Durchführung eines Sensors 46 bis in den Pumpeninnenraum 5. Diese Durchführung muss ebenfalls abgedichtet werden. Der Sensor 46 wird durch einen an den Pumpendeckel 2 (erster Teil) angeschraubten Klemmflansch 7 fixiert. In diesem Fall müssen die Dichtstellen am Aussendurchmesser des Sensors 46 durch die mediale Dichtung 11 und eine laterale Dichtung 12b abgedichtet werden. Die weitere Dichtstelle zwischen Klemmflansch 7 und Pumpendeckel 2 wird durch die zweite mediale Dichtung 12a abgedichtet. Zwischen den Dichtungen gibt es entweder eine Ausnehmung 15 oder (wie im rechten Teil der Fig. 6 dargestellt) zwei Ausnehmungen 15a und 15b.

## Patentansprüche

1. Dichtungsanordnung (1) einer Polymer-fördernden Zahnradpumpe, wobei mit der Dichtungsanordnung (1) ein Innenraum (5) der Zahnradpumpe gegenüber einem Aussenraum (6) der Zahnradpumpe abdichtbar ist und die Dichtungsanordnung mindestens zwei Teile (2, 3) mit mindestens je einer Dichtfläche (20, 21) umfasst, wobei die Dichtflächen (20, 21) umfassen:
- eine erste Dichtung (11) entlang eines ersten, medialen Perimeters der Dichtfläche (20, 21),
- eine zweite Dichtung (12) entlang eines zweiten, lateralen Perimeters der Dichtfläche (20, 21),
- eine Ausnehmung (15) zwischen der ersten Dichtung (11) und der zweiten Dichtung (12),
wobei die Ausnehmung (15) gegenüber dem Innenraum (5) abgedichtet ist, wobei eine Eintrittsstelle für Spülmedium und eine Austrittsstelle für Spülmedium vorgesehen sind, die mit der Ausnehmung (15) wirkverbunden sind und wobei die Ausnehmung (15) mit einer Quelle (30) mit einem Spülmedium derart verbindbar ist, dass die Ausnehmung (15) mit dem Spülmedium aktiv durchspülbar ist, wobei das Spülmedium ein inertes Gas oder eine inerte Flüssigkeit ist,
**dadurch gekennzeichnet, dass** die Dichtungsanordnung (1) weiter umfasst:
- einen Durchflussensor (61) zur Messung eines Spülmediumflusses durch die Ausnehmung (15),
- einen eingangsseitiger Drucksensor (62) und einen ausgangsseitiger Drucksensor (63), um die Druckverhältnisse in der Ausnehmung (15) zu überwachen, und
- einen Ein-/Aus-Schalter für ein gezieltes Stoppen des Spülmediumstroms durch die Ausnehmung (15), um eine Aussage über die Funktionsweise der Dichtungsanordnung (1) und allfällige Fehlfunktionen machen zu können.

2. Dichtungsanordnung (1) nach Anspruch 1, **dadurch gekennzeichnet, dass** die erste Dichtung (11) und/oder die zweite Dichtung (12)einen O-Ring oder eine Spiraldichtung umfassen.

3. Dichtungsanordnung (1) nach Anspruch 1 oder 2, umfassend die Quelle (30) mit einem Drucksteuerventil (60) und mit einem Durchflussmeter (61), sodass ein konstanter Fluss des Spülmediums durch die Ausnehmung (15) oder ein konstanter Druck des Spülmediums in der Ausnehmung (15) aufrecht haltbar ist.

4. Dichtungsanordnung (1) nach einem der Ansprüche 1 bis 3, **dadurch gekennzeichnet, dass** die Ausnehmung (15) und die Quelle (30) so ausgestaltet sind, dass ein geschlossener Spülmediumkreislauf aufrecht haltbar ist.

5. Dichtungsanordnung (1) nach einem der Ansprüche 1 bis 4, **dadurch gekennzeichnet, dass** die Ausnehmung (15) zumindest abschnittweise parallel zur ersten Dichtung (11) und/oder zur zweiten Dichtung (12) verläuft.

6. Dichtungsanordnung (1) nach einem der Ansprüche 1 bis 5, **dadurch gekennzeichnet, dass** ein erstes Teil (2) ein Gehäuse (2) der Fördereinrichtung (4) ist und dass ein zweites Teil (3) ein Deckel (3) auf dem Gehäuse (2) der Fördereinrichtung ist.

7. Dichtungsanordnung (1) nach einem der Ansprüche 1 bis 6, **dadurch gekennzeichnet, dass** das Spülmedium Stickstoff oder ein Silikon-Öl ist.

8. Dichtungsanordnung (1) nach einem der Ansprüche 1 bis 7, **dadurch gekennzeichnet, dass** die Ausnehmung (15) eine Nut ist.

9. Zahnradpumpe (4), zur Förderung eines Fördermediums in einem Innenraum (5), der von einem Aussenraum (6) im Wesentlichen hermetisch abgedichtet ist, wobei die Zahnradpumpe (4) mindestens eine Dichtungsanordnung (1) nach einem der Ansprüche 1 bis 8 aufweist.

10. Verfahren zum Betreiben einer Dichtungsanordnung (1) nach einem der Ansprüche 1 bis 8, wobei die Dichtungsanordnung die zwischen der ersten und der zweiten Dichtung (11, 12) liegende Ausnehmung (15) umfasst, **dadurch gekennzeichnet, dass** die Ausnehmung (15) mit dem Spülmedium gespült wird.

11. Verfahren nach Anspruch 10, **dadurch gekennzeichnet, dass** der Durchfluss des Spülmediums durch die Ausnehmung (15) oder der Druck des Spülmediums in der Ausnehmung (15) konstant gehalten wird.

12. Verfahren nach Anspruch 10 oder 11, **dadurch gekennzeichnet, dass** der Durchfluss des Spülmediums durch die Ausnehmung (15) gemessen wird.

13. Verfahren nach Anspruch 12, **dadurch gekennzeichnet, dass** aus Messungen des Durchflusses ein möglicher Mediumverlust an Spülmedium bestimmt wird und dass bei Überschreiten eines vorgegebenen Grenzwertes für den Mediumverlust eine akustische und/oder visuelle Warnanzeige aktiviert wird.

## Claims

1. Sealing arrangement (1) of a polymer-conveying gear pump, wherein the sealing arrangement (1) being able to seal an interior (5) of the gear pump from an exterior (6) of the gear pump and the sealing arrangement having at least two parts (2, 3) each with at least one sealing surface (20, 21), the sealing surfaces (20, 21) comprising:
- a first seal (11) along a first, medial perimeter of the sealing surface (20, 21),
- a second seal (12) along a second, lateral perimeter of the sealing surface (20, 21),
- a recess (15) between the first seal (11) and the second seal (12),
wherein the recess (15) being sealed off from the interior space (5), wherein an entry point for flushing medium and an exit point for flushing medium being provided, which are operatively connected to the recess (15) and wherein the recess (15) can be connected to a source (30) with a flushing medium in such a way that the recess (15) can be actively flushed through with the flushing medium, the flushing medium being an inert gas or an inert liquid,
**characterized in that** the sealing arrangement (1) further comprises:
- a flow sensor (61) for measuring a flushing medium flow rate through the recess (15),
- an inlet-side pressure sensor (62) and an outlet-side pressure sensor (63) to monitor the pressure conditions in the recess (15), and
- an on/off switch for a selective stopping of the flushing medium flow through the recess (15) to be able to make a statement about the functionality of the sealing arrangement (1) and any malfunctions.

2. Sealing arrangement (1) according to claim 1, **characterized in that** the first seal (11) and/or the second seal (12) comprise an O-ring or a spiral seal.

3. Sealing arrangement (1) according to claim 1 or 2, comprising the source (30) with a pressure control valve (60) and with a flow meter (61), so that a constant flow rate of the flushing medium through the recess (15) or a constant pressure of the flushing medium in the recess (15) can be maintained.

4. Sealing arrangement (1) according to one of claims 1 to 3, **characterized in that** the recess (15) and the source (30) are designed so that a closed flushing medium circuit can be maintained.

5. Sealing arrangement (1) according to one of claims 1 to 4, **characterized in that** the recess (15) extends parallel to the first seal (11) and/or to the second seal (12), at least partially.

6. Sealing arrangement (1) according to one of claims 1 to 5, **characterized in that** a first part (2) is a housing (2) of a conveyor device (4) and a second part (3) is a cover (3) on the housing (2) of the conveyor device.

7. Sealing arrangement (1) according to one of claims 1 to 6, **characterized in that** the flushing medium is nitrogen or a silicone oil.

8. Sealing arrangement (1) according to one of claims 1 to 7, **characterized in that** the recess (15) is a groove.

9. Gear pump (4) for conveying a conveying medium in an interior (5) which is essentially hermetically sealed from an exterior (6), wherein the gear pump (4) having at least one sealing arrangement (1) according to one of claims 1 to 8.

10. Method for operating a sealing arrangement (1) according to one of claims 1 to 8, wherein the sealing arrangement comprises the recess (15) lying between the first and the second seal (11, 12), **characterized in that** the recess (15) is flushed with the flushing medium.

11. The method according to claim 10, **characterized in that** the flow rate of the flushing medium through the recess (15) or the pressure of the flushing medium in the recess (15) is kept constant.

12. The method according to claim 10 or 11, **characterized in that** the flow rate of the flushing medium through the recess (15) is measured.

13. The method according to claim 12, **characterized in that** a possible loss of flushing medium is determined from measurements of the flow rate and **in that** an acoustic and/or visual warning signal is activated when a predetermined limit value for the loss of medium is exceeded.

## Revendications

1. Système d'étanchéité (1) d'une pompe à engrenages transportant du polymère, le système d'étanchéité (1) permettant d'étanchéifier un espace intérieur (5) de la pompe à engrenages par rapport à un espace extérieur (6) de la pompe à engrenages, et le système d'étanchéité comprenant au moins deux parties (2, 3) avec au moins chacune une surface d'étanchéité (20, 21), les surfaces d'étanchéité (20, 21) comprenant :
- un premier joint (11) le long d'un premier périmètre médian de la surface d'étanchéité (20, 21),
- un deuxième joint (12) le long d'un deuxième périmètre latéral de la surface d'étanchéité (20, 21),
- un évidement (15) entre le premier joint (11) et le deuxième joint (12), dans lequel l'évidement (15) est rendu étanche par rapport à l'espace intérieur (5), dans lequel il est prévu un point d'entrée pour le fluide de rinçage et un point de sortie pour le fluide de rinçage, lesquels sont en liaison active avec l'évidement (15), et dans lequel l'évidement (15) peut être raccordé à une source (30) de fluide de rinçage de telle sorte que l'évidement (15) peut être rincé activement avec le fluide de rinçage, le fluide de rinçage étant un gaz inerte ou un liquide inerte,
**caractérisé en ce que** le système d'étanchéité comprend :
- un capteur de débit (61) pour mesurer le flux d'un fluide de rinçage à travers l'évidement (15),
- un capteur de pression côté entrée (62) et un capteur de pression côté sortie (63) pour surveiller les rapports de pression dans l'évidement (15), et
- un interrupteur marche/arrêt pour arrêter de façon ciblée le flux de fluide de rinçage à travers l'évidement (15) pour pouvoir donner des indications sur le bon fonctionnement du système d'étanchéité (1) et sur les éventuels dysfonctionnements.

2. Système d'étanchéité (1) selon la revendication 1, **caractérisé en ce que** le premier joint (11) et/ou le deuxième joint (12) comprend un joint torique ou un joint d'étanchéité en spirale.

3. Système d'étanchéité (1) selon la revendication 1 ou 2, comprenant la source (30) avec une valve de commande de pression (60) et un débitmètre (61), de sorte qu'il est possible de maintenir un flux constant du fluide de rinçage à travers l'évidement (15) ou une pression constante du fluide de rinçage dans l'évidement (15).

4. Système d'étanchéité (1) selon l'une des revendications 1 à 3, **caractérisé en ce que** l'évidement (15) et la source (30) sont conçus de telle sorte qu'il est possible de maintenir un circuit de fluide de rinçage fermé.

5. Système d'étanchéité (1) selon l'une des revendications 1 à 4, **caractérisé en ce que** l'évidement (15) s'étend au moins par endroits parallèlement au premier joint (11) et/ou au deuxième joint (12).

6. Système d'étanchéité (1) selon l'une des revendications 1 à 5, **caractérisé en ce que** la première partie (2) est un boîtier (2) du dispositif de transport (4) et **en ce que** la deuxième partie (3) est un couvercle (3) sur le boîtier (2) du dispositif de transport.

7. Système d'étanchéité (1) selon l'une des revendications 1 à 6, **caractérisé en ce que** le fluide de rinçage est de l'azote ou une huile de silicone.

8. Système d'étanchéité (1) selon l'une des revendications 1 à 7, **caractérisé en ce que** l'évidement (15) est une rainure.

9. Pompe à engrenages (4) pour transporter un fluide de transport dans un espace intérieur (5) rendu sensiblement hermétique par rapport à un espace extérieur (6), la pompe à engrenages (4) présentant au moins un système d'étanchéité (1) selon l'une des revendications 1 à 8.

10. Procédé pour faire fonctionner un système d'étanchéité (1) selon l'une des revendications 1 à 8, le système d'étanchéité comprenant l'évidement (15) situé entre le premier et le deuxième joint (11, 12), **caractérisé en ce que** l'évidement (15) est rincé avec le fluide de rinçage.

11. Procédé selon la revendication 10, **caractérisé en ce que** le débit du fluide de rinçage à travers l'évidement (15) est maintenu constant ou la pression du fluide de rinçage dans l'évidement (15) est maintenue constante.

12. Procédé selon la revendication 10 ou 11, **caractérisé en ce que** le débit du fluide de rinçage à travers l'évidement (15) est mesuré.

13. Procédé selon la revendication 12, **caractérisé en ce que**, à partir des mesures du débit, on détermine une éventuelle perte de fluide de rinçage et **en ce que**, lorsque l'on dépasse d'une valeur limite prédéterminée pour la perte de fluide, une indication d'alerte sonore et/ou visuelle est activée.
